# FASCICULE DE BREVET EUROPEEN

(11) **EP 0 423 020 B1**
(45) Date de publication et mention de la délivrance du brevet: **15.09.1993**
(21) Numéro de dépôt: 90402809.9
(22) Date de dépôt: 09.10.1990
(51) Int. Cl.: F16K 15/06, F16K 27/02

(54) **Clapet de non-retour**
Rückschlagventil
Check valve

(30) Priorité: 13.10.1989 FR 8913413
(43) Date de publication de la demande: 17.04.1991
(73) Titulaire: SOCLA, F-71107 Chalon s/Saone Cédex (FR)
(72) Inventeur: Neuzeret, Bernard, F-71530 Fragnes (FR)
(74) Mandataire: Rinuy, Santarelli

(56) Documents cités:
- DE-C- 269 355
- FR-A- 2 462 634
- US-A- 1 470 018
- US-A- 2 761 463
- US-A- 2 844 164

## Description

L'invention a trait à un clapet de non-retour comportant un corps muni d'une ouverture obturée par un couvercle, par laquelle on peut monter ou démonter un obturateur de non-retour.

On connaît déjà de tels clapets, qui sont très appréciés malgré certains inconvénients, car ils permettent des interventions de réparation ou d'entretien qui ne nécessitent pas de déposer le clapet, étant donné qu'on peut accéder à l'obturateur autrement que par les raccords entre le clapet et les canalisations entre lesquelles il va s'interposer.

Dans un premier type de clapet connu, l'obturateur est un battant articulé à proximité du couvercle, de telle sorte que ces clapets sont aisés à réaliser, mais ils n'offrent que de faibles performances en étanchéité et en comportement hydraulique.

Dans un deuxième type de clapet connu, par exemple du document FR-A-2427532, l'obturateur est solidaire d'une tige coaxiale à lui-même coopérant avec un guide dont est muni le corps. Avec ces clapets, on obtient des performances satisfaisantes en étanchéité, mais ils introduisent une perte de charge importante et nécessitent un corps de clapet relativement complexe dont l'obtention est onéreuse, étant donné que pour permettre la mise en place par le couvercle de la tige dans le guide du corps, l'obturateur doit être mobile suivant un axe transversal ou incliné par rapport à l'axe amont-aval auquel sont coaxiaux les raccords du clapet, c'est-à-dire l'axe général de la canalisation dans laquelle est introduite le clapet.

On connaît également un clapet avec un obturateur du même type, mais mobile suivant l'axe amont-aval, ce qui est rendu possible par le fait que les moyens de guidage de la tige sont portés uniquement par le couvercle, la mise en place se faisant en introduisant transversalement l'obturateur par l'ouverture, puis en faisant pivoter l'ensemble obturateur-couvercle pour mettre en place le couvercle sur l'ouverture tandis que l'obturateur vient se placer dans l'axe amont-aval. Du fait de cette disposition de l'obturateur, le clapet présente un bon comportement hydraulique, mais ses performances en étanchéité sont faibles.

L'invention vise à fournir un clapet du même genre, mais qui à la fois soit facile à obtenir, ait un bon comportement hydraulique et de bonnes performances en étanchéité.

Elle propose à cet effet un clapet qui se caractérisé en ce que l'obturateur qu'il comporte est mobile suivant un axe amont-aval auquel sont coaxiaux les raccords du clapet, et coopère avec des moyens de montage comportant :
- un premier élément fixé au corps de clapet, comportant une tige de guidage à coulissement de l'obturateur;
- un deuxième élément fixé au corps de clapet, comportant une paroi centrale ;
- un ressort disposé entre l'obturateur et ladite paroi centrale, sollicitant l'obturateur vers ledit premier élément ;
   l'obturateur et lesdits moyens de montage étant adaptés à être mis en place par ladite ouverture en fixant d'abord le premier élément sur le corps de clapet et en mettant alors en place l'obturateur et le ressort puis le deuxième élément.

La disposition de l'obturateur suivant l'axe amont-aval permet au clapet d'avoir un bon comportement hydraulique, tandis que le guidage de l'obturateur par un élément directement solidaire du corps de clapet offre un positionnement très précis de l'obturateur par rapport au siège, de telle sorte que le clapet suivant l'invention offre de bonnes performances en étanchéité.

Le clapet proposé est en outre simple et économique, ses composants étant faciles à obtenir et son montage aisé et commode à réaliser.

Selon des caractéristiques préférées, ledit premier élément comporte une bague, reliée à la tige de guidage par des bras radiaux, et dont une surface d'extrémité forme un siège pour l'obturateur.

Il est en effet intéressant que ce ne soit pas directement une zone du corps de clapet qui forme le siège, notamment parce que cela facilite l'obtention du corps et permet de changer le siège s'il vient à être dégradé.

En outre, le fait que le siège et le guide de l'obturateur soient monobloc permet un positionnement extrêmement précis de l'obturateur par rapport au siège, ce qui est intéressant sur le plan de l'étanchéité.

Selon d'autres caractéristiques préférées, également favorables à l'étanchéité, et notamment à son maintien après un usage prolongé du clapet, la tige de guidage s'étend de part et d'autre d'un plan contenant ladite surface d'extrémité formant un siège pour l'obturateur, tandis que le profil de l'obturateur et la longueur de la tige de guidage sont adaptés à ce que le centre de gravité de l'obturateur soit situé dans la tige de guidage pour chaque position que peut adopter l'obturateur.

On obtient en effet ainsi que l'obturateur reste mobile suivant un axe perpendiculaire au plan d'étanchéité siège-obturateur, quelle que soit l'usure des guidages.

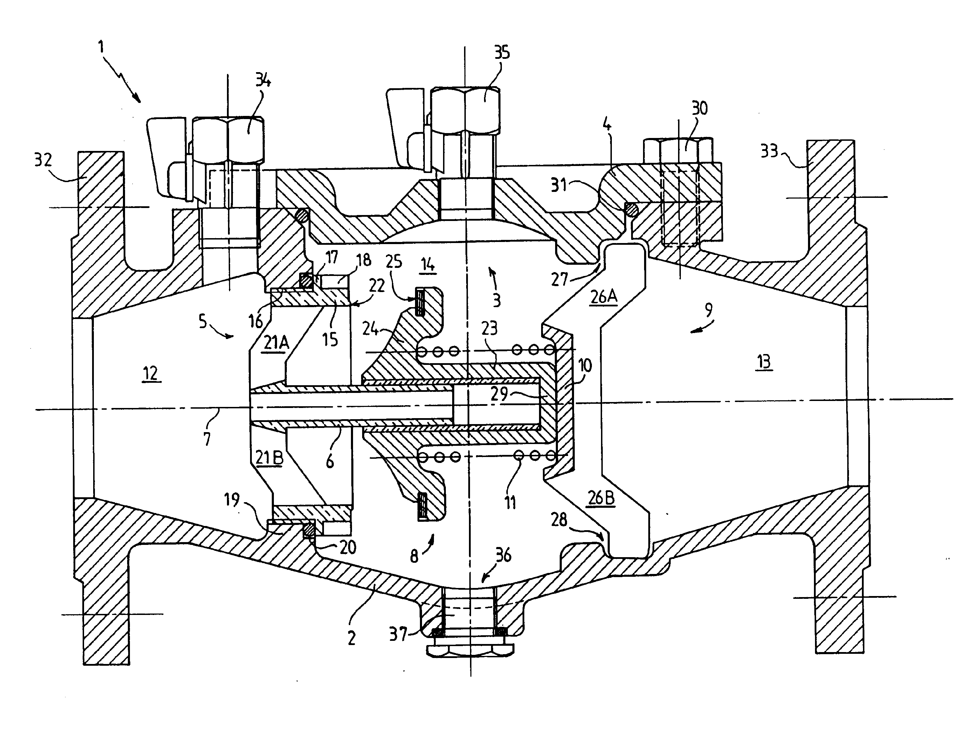

L'exposé de l'invention va maintenant être poursuivi par la description d'un exemple de réalisation, donné ci-après à titre illustratif et non limitatif, en référence au dessin annexé dont la figure unique est une coupe longitudinale d'un clapet conforme à l'invention.

Le clapet de non-retour 1 représenté comporte un corps 2 muni d'une ouverture 3 obturée par un couvercle 4, un premier élément 5 fixé au corps 2 et comportant une tige de guidage 6 disposée coaxialement à un axe amont-aval 7, un obturateur 8 enfilé sur la tige 6 qui le guide à coulissement, un deuxième élément 9 fixé au corps 2 et comportant une paroi centrale 10, et un ressort 11 disposé entre l'obturateur 8 et la paroi sollicitant l'obturateur vers le premier élément 5.

Le corps 2 comporte un embout amont divergent 12 et un embout aval convergent 13 encadrant une chambre 14 surmontée par l'ouverture 3, le premier élément 5 est fixé au corps 2 à la jonction entre l'embout 12 et la chambre 14 tandis que le deuxième élément 9 est fixé à la jonction de la chambre 14 et de l'embout 13.

Le premier élément 5 comporte une bague 15 dont la surface latérale extérieure porte un filetage 16, un épaulement 17 et des moyens de prise 18 pour un outil de vissage, le filetage 16 et l'épaulement 17 coopérant avec un bossage annulaire 19 du corps 2, dont l'alésage taraudé coopère avec le filetage 16, et dont le côté situé vers la chambre 14 présente une gorge munie d'un joint d'étanchéité 20 sur lequel porte l'épaulement 17.

La bague 15 est reliée à la tige 6 par des bras radiaux 21A et 21B, et sa surface d'extrémité 22 située dans la chambre 14 forme un siège pour l'obturateur 8, la tige 6 s'étendant de part et d'autre d'un plan contenant la surface 22.

L'obturateur 8 comporte une portion centrale tubulaire allongée 23 dont l'alésage coopère avec la tige de guidage, et un flasque d'obturation 24 se raccordant à la portion 23 à l'extrémité située du côté du premier élément 5, le flasque 24 portant une surface de contact 25 avec la surface 22, et servant d'appui pour le ressort 11 qui est disposé autour de la portion 23.

Le deuxième élément 9 est fixé au corps 2 par des bras radiaux 26A et 26B, le bras 26A étant maintenu dans une encoche 27 formée par coopération du corps 2 et du couvercle 4 tandis que le bras 26B est positionné dans l'encoche 28 du corps 2.

L'obturateur 8 est mobile entre la position passante extrême illustrée sur le dessin, où son extrémité 29 est en contact avec la paroi centrale 10, et une position de fermeture où la surface de contact 25 porte sur la surface 22 formant un siège.

L'obturateur adopte ces positions dans les mêmes conditions que pour tous les clapets de non-retour, c'est-à-dire qu'il prend la position d'ouverture pour permettre une circulation de fluide dans le sens amont vers aval, et la position de fermeture pour interdire une circulation en sens inverse.

Le profil de l'obturateur 8 et la longueur de la tige de guidage 6 sont tels que le centre de gravité de l'obturateur est situé dans la tige de guidage 6 pour chaque position que peut adopter l'obturateur, y compris la position passante extrême représentée, ce qui est favorable à la qualité du contact entre les surfaces 22 et 25, c'est-à-dire à l'étanchéité en position de fermeture, même après un usage prolongé ayant conduit à une certaine usure des guidages.

On notera que la surface 25 est réalisée par un joint annulaire rapporté sur la face amont de l'obturateur au voisinage de sa périphérie.

Le caractère allongé et tubulaire de la portion 23 offre l'avantage de permettre de maximiser les longueurs sur lesquelles la tige et l'obturateur coopèrent, tout en procurant un soutien central au ressort 11.

On observera en outre que cette portion tubulaire 23 est fermée à l'extrémité 29 et que la tige 6 est creuse, ce qui offre l'avantage de minimiser la surface hydrodynamiquement utile de l'obturateur qui est perdue du fait du guidage en partie centrale tandis qu'on évite de ralentir le passage de l'obturateur d'une position d'ouverture vers une position de fermeture, le fluide situé dans l'alésage 23 s'évacuant sans difficulté par le creux de la tige 6 ; et que les bras 21A, 21B et 26A, 26B ainsi que le flasque 24 ont un profil hydrodynamique, pour minimiser les pertes de charge.

Pour mettre en place l'obturateur 8 et ses moyens de montage 5,9 et 11, on passe par l'ouverture 3 en fixant d'abord le premier élément 5 sur le corps de clapet, et en mettant alors en place l'obturateur 8 et le ressort 11, puis le deuxième élément 9.

Le premier élément 5 est d'abord vissé à la main dans l'alésage taraudé de l'épaulement 19, puis serré à l'outil grâce aux moyens de prise 18, qui restent à tout moment facilement accessibles, y compris dans la position serrée représentée où ils sont à l'aplomb du bord de l'ouverture.

On introduit alors l'obturateur dans la chambre 14, et compte tenu de la place disponible, on le met aisément en place sur la tige 6, on fait une opération pratiquement similaire avec le ressort qu'on enfile par une extrémité sur la portion 23 de l'obturateur, que l'on a de préférence préalablement mis contre le premier élément 5 pour faciliter l'opération, ensuite on comprime le ressort 11 et on introduit le deuxième élément 9 suivant un mouvement approximativement vertical jusqu'à introduire l'extrémité du bras 26B dans l'encoche 28 et placer l'extrémité du bras 26A en regard de la portion de l'encoche 27 que porte le corps 2, et quand on relâche le ressort 11 l'extrémité du bras 26A vient dans cette portion d'encoche s'il n'y était pas et y reste en place grâce au ressort.

On peut alors mettre en place le couvercle 4 sans aucune difficulté puisqu'il n'y a aucune force élastique contraire qui gêne cette mise en place, et quand on serre le couvercle sur le corps on bloque l'extrémité du bras 26A en resserrant l'encoche 27.

Le montage des moyens de non-retour 5, 8, 11 et 9 dans le clapet est ainsi particulièrement aisé et commode, il n'y a qu'un petit nombre d'opérations à réaliser dont aucune ne demande une habileté particulière, et c'est uniquement la mise en place du premier élément et du couvercle qui nécessitent un outil.

On observera qu'au lieu de mettre en place l'obturateur 8, puis le ressort 11, on peut les mettre en place ensemble si le ressort a été préalablement enfilé sur l'obturateur.

Dans ces conditions, on peut aussi bien prévoir que l'obturateur et le ressort soient des éléments séparés ou qu'ils forment un ensemble obturateur-ressort où ils sont fixés l'un à l'autre, par exemple par la zone de contact entre le flasque 24 et l'extrémité correspondante du ressort.

En outre, il peut dans certains cas être intéressant de remplacer le bras 26B par deux ou davantage des bras radiaux.

La fixation du couvercle 4 sur le corps 2 se fait par des vis 30, et pour assurer l'étanchéité de l'obturation un joint 31 est prévu entre le corps et le couvercle.

Le corps 2 comporte un raccord amont 32 et un raccord aval 33 coaxiaux à l'axe 7, pour raccorder le clapet aux canalisations entre lesquelles il est destiné à être interposé, et des prises de pression 34 et 35 disposées respectivement dans la paroi de l'embout 12 et dans le couvercle 4, sont prévues pour tester l'étanchéité du clapet, et un orifice de drainage 36 fermé ici par un bouchon 37 est prévu à la partie la plus basse du clapet.

## Revendications

1. Clapet de non-retour comportant un corps (2) muni d'une ouverture (3) obturée par un couvercle (4), par laquelle on peut monter ou démonter un obturateur (8) de non-retour, caractérisé en ce que l'obturateur (8) qu'il comporte est mobile suivant un axe amont-aval (7) auquel sont coaxiaux les raccords (32, 33) du clapet, et coopère avec des moyens de montage comportant :
- un premier élément (5) fixé au corps de clapet (2), comportant une tige (6) de guidage à coulissement de l'obturateur ;
- un deuxième élément (9) fixé au corps de clapet, comportant une paroi centrale (10) ;
- un ressort (11) disposé entre l'obturateur (8) et ladite paroi centrale (10), sollicitant l'obturateur vers ledit premier élément (5) ;
l'obturateur (8) et lesdits moyens de montage (5, 9, 11) étant adaptés à être mis en place par ladite ouverture (3) en fixant d'abord le premier élément (5) sur le corps de clapet (2), et en mettant alors en place l'obturateur (8) et le ressort (11) puis le deuxième élément (9).

2. Clapet selon la revendication 1, caractérisé en ce que le corps de clapet comporte un embout amont (12) et un embout aval (13) encadrant une chambre (14) surmontée par ladite ouverture (3), des moyens de montage (19) du premier élément (5) à la jonction entre l'embout amont et ladite chambre, et des moyens de montage (27, 28) du deuxième élément (9) entre ladite chambre et l'embout aval.

3. Clapet selon l'une quelconque des revendications 1 ou 2, caractérisé en ce que le premier élément (5) comporte une bague (15), reliée à la tige (6) de guidage par des bras radiaux (21A,21B), et dont une surface d'extrémité (22) forme un siège pour l'obturateur (8).

4. Clapet selon la revendication 3, caractérisé en ce que la surface latérale extérieure de ladite bague porte un filetage (16) et un épaulement (17) coopérant avec un bossage annulaire (19) du corps de clapet (2), ainsi que des moyens de prise (18) pour un outil de vissage.

5. Clapet selon l'une quelconque des revendications 3 ou 4, caractérisé en ce que la tige (6) de guidage s'étend de part et d'autre d'un plan contenant ladite surface d'extrémité (22) formant siège pour l'obturateur.

6. Clapet selon l'une quelconque des revendications 1 à 5, caractérisé en ce que le profil de l'obturateur (8) et la longueur de la tige (6) de guidage sont adaptés à ce que le centre de gravité de l'obturateur soit situé dans la tige de guidage pour chaque position que peut adopter l'obturateur.

7. Clapet selon l'une quelconque des revendications 1 à 6, caractérisé en ce que l'obturateur (8) comporte une portion centrale tubulaire allongée (23) dont l'alésage coopère avec la tige (6) de guidage, et un flasque d'obsturation (24) se raccordant à la portion centrale (23) à une première extrémité située du côté du premier élément (5), ce flasque d'obturation (24) portant une surface de contact (25) adapté à coopérer avec un siège annulaire (22).

8. Clapet selon la revendication 7, caractérisé en ce que l'obturateur (8) est mobile entre une position passante où une deuxième extrémité (29) de l'obturateur est en contact avec la paroi centrale (10) du deuxième élément, et une position de fermeture où ladite surface de contact (25) porte sur ledit siège (22).

9. Clapet selon l'une quelconque des revendications 7 ou 8, caractérisé en ce que la portion centrale tubulaire (23) de l'obturateur est fermée à une deuxième extrémité (29) tandis que la tige (6) de guidage du premier élément est creuse.

10. Clapet selon l'une quelconque des revendications 7 à 9, caractérisé en ce que le ressort (11) est disposé autour de la portion centrale (23) de l'obturateur et porte contre le flasque d'obturation (24).

11. Clapet selon l'une quelconque des revendications 1 à 10, caractérisé en ce que le deuxième élément (9) comporte des bras radiaux (26A,26B) s'étendant à partir de la paroi centrale (10), par lesquels il est fixé au corps de clapet (2).

12. Clapet selon la revendication 11, caractérisé en ce que le deuxième élément (9) comporte un bras (26A) dont l'extrémité est maintenue dans une encoche (27) formée par coopération du corps de clapet (2) et du couvercle (4), et au moins un bras (26B) dont l'extrémité est positionnée dans une encoche (28) du corps de clapet (2).

## Patentansprüche

1. Rückschlagventil mit einem Ventilkörper (2), der eine durch einen Deckel (4) verschlossene Öffnung (3) aufweist, durch die ein Rückschlag-Schieber (8) ein- und ausgebaut werden kann, **dadurch gekennzeichnet,** daß der Schieber (8) entlang einer Achse (7) stromaufwärts/stromabwärts beweglich ist, zu der die Ventil-Anschlußstücke (32, 33) koaxial angeordnet sind, und mit Montagemitteln zusammenwirkt, die
- ein erstes, am Ventilkörper (2) befestigtes Element (5), das einen Stab (6) zur Gleitführung des Schiebers aufweist,
- ein zweites, am Ventilkörper befestigtes Element (9) mit einer mittigen Wand (10), und
- eine zwischen dem Schieber (8) und der mittigen Wand (10) angeordnete Feder (11), die den Schieber zum ersten Element (5) hin drückt,
umfassen, und daß der Schieber (8) und die Montagemittel (5, 9, 11) für den Einbau durch die Öffnung (3) ausgelegt sind, wobei zuerst das erste Element (5) auf dem Ventilkörper (2) befestigt wird, sodann der Schieber (8) sowie die Feder (11) und danach das zweite Element (9) eingebaut werden.

2. Ventil nach Anspruch 1, dadurch gekennzeichnet, daß der Ventilkörper ein Einlaßteil (12) und ein Auslaßteil (13), die eine Kammer (14) einschließen, oberhalb der die Öffnung (3) angeordnet ist, Montagemittel (19) für das erste Element (5) an der Verbindungsstelle zwischen dem Einlaßteil und der Kammer sowie Montagemittel (27, 28) für das zweite Element (9) zwischen der Kammer und dem Auslaßteil aufweist.

3. Ventil nach einem der Ansprüche 1 oder 2, dadurch gekennzeichnet, daß das erste Element (5) einen Ring (15) aufweist, der mit dem Führungsstab (6) durch radiale Arme (21A, 21B) verbunden ist und dessen eine Endfläche (22) einen Sitz für den Schieber (8) bildet.

4. Ventil nach Anspruch 3, dadurch gekennzeichnet, daß die seitliche Außenfläche des Ringes ein Gewinde (16) und eine Schulter (17), die mit einem ringförmigen Vorsprung (19) des Ventilkörpers (2) zusammenwirkt, sowie Mittel (18) zum Ansetzen eines Schraubwerkzeuges aufweist.

5. Ventil nach einem der Ansprüche 3 oder 4, dadurch gekennzeichnet, daß der Führungsstab (6) sich beidseits einer Ebene erstreckt, welche die Endfläche (22), die den Sitz für den Schieber bildet, enthält.

6. Ventil nach einem der Ansprüche 1 bis 5, dadurch gekennzeichnet, daß die Form des Schiebers (8) und die Länge des Führungsstabes (6) so ausgelegt sind, daß der Schwerpunkt des Schiebers in jeder Stellung, die der Schieber einnehmen kann, im Führungsstab liegt.

7. Ventil nach einem der Ansprüche 1 bis 6, dadurch gekennzeichnet, daß der Schieber (8) einen zentralen, rohrförmigen, länglichen Abschnitt (23), dessen Bohrung mit dem Führungsstab (6) zusammenwirkt, und einen Verschlußflansch (24) aufweist, der sich an den zentralen Abschnitt (23) an einem ersten, auf der Seite des ersten Elementes (5) liegenden Ende anschließt und eine zum Zusammenwirken mit einem ringförmigen Sitz (22) eingerichtete Kontaktfläche (25) aufweist.

8. Ventil nach Anspruch 7, dadurch gekennzeichnet, daß der Schieber (8) zwischen einer Durchlaßstellung, in der sich ein zweites Ende (29) des Schiebers in Kontakt mit der mittigen Wand (10) des zweiten Elementes befindet, und einer Schließstellung beweglich ist, in der die Kontaktfläche (25) auf dem Sitz (22) aufliegt.

9. Ventil nach einem der Ansprüche 7 oder 8, dadurch gekennzeichnet, daß der zentrale ringförmige Abschnitt (23) des Schiebers an einem zweiten Ende (29) verschlossen ist, während der Führungsstab (6) des ersten Elementes hohl ausgebildet ist.

10. Ventil nach einem der Ansprüche 7 bis 9, dadurch gekennzeichnet, daß die Feder (11) um den zentralen Abschnitt (23) des Schiebers herum angeordnet ist und gegen den Verschlußflansch (24) drückt.

11. Ventil nach einem der Ansprüche 1 bis 10, dadurch gekennzeichnet, daß das zweite Element (9) radiale Arme (26A, 26B) aufweist, die sich von der mittigen Wand (10) aus erstrecken und durch die es am Ventilkörper (2) befestigt ist.

12. Ventil nach Anspruch 11, dadurch gekennzeichnet, daß das zweite Element (9) einen Arm (26A), dessen Ende in einer durch ein Zusammenwirken des Ventilkörpers (2) und des Deckels (4) gebildeten Vertiefung (27) gehalten ist, und wenigstens einen Arm (26B) aufweist, dessen Ende in einer Vertiefung (28) des Ventilkörpers (2) aufgenommen ist.

## Claims

1. A non-return valve comprising a body(2) equipped with an opening (3), closed by a cover (4), through which it is possible to mount or dismount a non-return obturator (8),characterized in that the obturator (8) which it comprises is movable along an upstream-downstream axis (7), coaxial with the parts (32, 33) for connecting the valve, and cooperates with means for mounting comprising:
- a first element (5), fixed to the body of the valve (2), comprising a rod (6) for guiding the sliding of the obturator;
- a second element (9), fixed to the body of the valve, comprising a central wall (10);
- a spring (11), disposed between the obturator (8) and the said central wall (10), forcing the obturator towards the said first element (5);
the obturator (8) and the said means for mounting (5, 9, 11) being adapted to be installed through the said opening (3) by first of all fixing the first element (5) to the body of the valve (2) and by then putting the obturator (8) and the spring (11) in place, and then the second element (9).

2. A valve as claimed in claim 1, characterized in that the body of the valve comprises an upstream connecting piece (12) and a downstream connecting piece (13) enclosing a chamber (14) surmounted by the said opening (3), means (19) for mounting the first element (5) at the junction between the upstream connecting piece and the said chamber, and means (27, 28) for mounting the second element (9) between the said chamber and the downstream connecting piece.

3. A valve as claimed in any one of claims 1 or 2, characterized in that the first element (5) comprises a ring (15), connected to the guide rod (6) by radial arms (21A, 21B), one end surface (22) of which forms a seat for the obturator (8).

4. A valve as claimed in claim 3, characterized in that the lateral external surface of the said ring comprises a thread (16) and a shoulder (17) cooperating with an annular projection (19) of the body of the valve (2) and also means for gripping (18) by a screwing tool.

5. A valve as claimed in any one of claims 3 or 4, characterized in that the guide rod (6) extends on either side of a plane containing the said end surface (22) which forms a seat for the obturator.

6. A valve as claimed in any one of claims 1 to 5, characterized in that the shape of the obturator (8) and the length of the guide rod (6) are adapted so that, for each position which the obturator can adopt, the centre of gravity of the obturator is situated in the guide rod.

7. A valve as claimed in any one of claims 1 to 6, characterized in that the obturator (8) comprises an elongated central tubular portion (23), the bore of which cooperates with the guide rod (6), and a sealing flange (24) connected to the central portion (23) at a first end located at the same side as the first element (5), this sealing flange (24) comprising a contact surface (25) adapted to cooperate with an annular seat (22).

8. A valve as claimed in claim 7, characterized in that the obturator (8) is movable between an open position in which a second end (29) of the obturator is in contact with the central wall (10) of the second element, and a closed position in which the said contact surface (25) bears on the said seat (22).

9. A valve as claimed in any one of claims 7 or 8, characterized in that the central tubular portion (23) of the obturator is closed at a second end (29) whilst the guide rod (6) of the first element is hollow.

10. A valve as claimed in any one of claims 7 to 9, characterized in that the spring (11) is disposed around the central portion (23) of the obturator and bears against the sealing flange (24).

11. A valve as claimed in any one of claims 1 to 10, characterized in that the second element (9) comprises radial arms (26A, 26B), extending from the central wall (10), by means of which it is fixed to the body of the valve (2).

12. A valve as claimed in claim 11, characterized in that the second element (9) comprise an arm (26A) the end of which is held in a recess (27) formed jointly by the body of the valve (2) and the cover (4) and at least one arm (26B) the end of which is positioned in a recess (28) in the body of the valve (2).
